# EUROPÄISCHE PATENTANMELDUNG

(11) **EP 0 856 615 A2**
(43) Veröffentlichungstag der Anmeldung: **05.08.1998**
(21) Anmeldenummer: 98101020.0
(22) Anmeldetag: 22.01.1998
(51) Int. Cl.: E04C 2/54

(54) **Glasbauelement für die Beleuchtung von Innenräumen**

(30) Priorität: 30.01.1997 DE 19703398
(71) Anmelder: SAINT-GOBAIN VITRAGE, 92400 Courbevoie (FR)
(72) Erfinder: Holtmann, Klaus, Dr., 52249 Eschweiler (DE)
(74) Vertreter: Biermann, Wilhelm, Dr.-Ing. (Pat-Ass.)

(57) **Zusammenfassung**

Ein Glasbauelement zum passiven Beleuchten von Innenräumen durch Lichtlenkung enthält wenigstens eine transparente Platte (23), die auf ihren Hauptflächen mit zwei Glasscheiben (21,22) verbunden ist. Das Glasbauelement enthält ferner ein flächig ausgebildetes erstes Lichtablenkelement (28), das einfallende Lichtstrahlen in die Platte (23) unter einem Winkel einkoppelt, bei dem an den Grenzflächen zwischen der Platte (23) und den Glasscheiben (21,22) Totalreflexion eintritt. Es enthält außerdem ein im Abstand von dem ersten Lichtablenkelement (28) angeordnetes zweites Lichtablenkelement (34), das zum Auskoppeln von Lichtstrahlen aus der Platte (23) dient.

## Beschreibung

Die Erfindung betrifft ein Glasbauelement für die Beleuchtung von Innenräumen.

Es ist bekannt, Glasbauelemente wie Isolierglasscheiben, Wandelemente für Gebäude oder Sonnenschutzlamellen mit Lichtablenkelementen zu versehen.

Aus DE 38 40 262 A1 ist ein transparentes Wandelement für Gebäude bekannt, das eine mit holographischen Elementen versehene Platte aufweist. Die Hologramme dienen als Lichtablenkelemente. Sie lenken einfallendes Licht richtungsselektiv ab oder reflektieren es. Dadurch ist es möglich, in einzelnen Bereichen eines Raumes eine höhere Beleuchtungsintensität als in anderen Bereichen dieses Raumes zu erreichen.

Aus DE 41 34 955 A1 ist ein Glasbauelement bekannt, bei dem erste und zweite Lichtablenkelemente in verschiedenen Ebenen angeordnet sind. Die ersten Lichtablenkelemente sind als strahlungssammelnde Elemente ausgebildet, die Lichtstrahlen in Richtung auf den direkten Strahlungsdurchtritt verhindernde Strahlungsempfangselemente fokussieren. Zwischen den Strahlungsempfangselementen sind lichtlenkende optische Gitter oder Hologramme als zweite Lichtablenkelemente angeordnet. Diese zweiten Lichtablenkelemente kompensieren die durch die ersten Lichtablenkelemente bewirkte Strahlablenkung. Durch dieses Glasbauelement wird einerseits der Durchtritt von direktem Sonnenlicht verhindert, andererseits aber die Durchsicht in die nicht von den Lichtempfangselementen eingenommenen Bereiche ermöglicht.

Der Erfindung liegt die Aufgabe zugrunde, ein Glasbauelement für die Beleuchtung von Räumen zu schaffen, durch das an einer oder mehreren Stellen des Raumes eine höhere Lichtintensität erzielt wird, als es der Lichtintensität der unmittelbar auf diese Stellen gerichteten Lichtstrahlen entspricht. Das Glasbauelement soll insbesondere dazu geeignet sein, Licht in Bereiche eines Raumes zu lenken, die durch das Tageslicht nicht oder nicht ausreichend ausgeleuchtet sind.

Erfindungsgemäß wird diese Aufgabe durch ein Glasbauelement für die Beleuchtung von Innenräumen gelöst, das wenigstens eine transparente Platte aufweist, deren Hauptflächen an Medien mit niedrigerem Brechungsindex als die Platte selbst grenzen, mit wenigstens einem flächig ausgebildeten ersten Lichtablenkelement, das einfallende Lichtstrahlen in die Platte unter einem Winkel einkoppelt, bei dem an der Grenzfläche zwischen der Platte und dem Medium Totalreflexion eintritt, und das wenigstens ein im Abstand von dem ersten Lichtablenkelement auf einer der beiden Hauptflächen der Platte angeordnetes zweites Lichtablenkelement zum Auskoppeln von Lichtstrahlen aus der Platte aufweist.

Die Erfindung sieht also vor, ein lichtdurchlässiges, flächig ausgebildetes Element mit voneinander räumlich getrennten Lichtablenkelementen zu versehen und zwischen Medien mit einem niedrigeren optischen Brechungsindex anzuordnen. Das erste Lichtablenkelement, das mit der Platte optisch gekoppelt ist, lenkt die einfallenden Lichtstrahlen so weit ab, daß sie möglichst schräg, und zwar mindestens unter dem Grenzwinkel der Totalreflexion, auf die andere Oberfläche der Platte auftreffen.

Da die Platte einen höheren optischen Brechungsindex hat als das sie umgebende Medium, wie Luft, oder als eine mit der Platte in Kontakt stehende transparente Scheibe, oder als eine Oberflächenbeschichtung dieser Scheibe, werden die schräg einfallenden Lichtstrahlen an der Grenzfläche zwischen der Platte und dem Medium total reflektiert. Ein weiteres mit der Platte optisch gekoppeltes Lichtablenkelement koppelt die Lichtstrahlen aus der Platte aus und lenkt sie gezielt in die Raumbereiche, für die eine (zusätzliche) Ausleuchtung gewünscht wird. So wird ein passives, d. h. nur einfallendes Licht lenkendes Beleuchtungselement mit vielfältigen Anwendungsmöglichkeiten geschaffen.

Als Lichtablenkelemente können beispielsweise Hologramme oder Gitter verwendet werden. Grundsätzlich kann das erfindungsgemäße Glasbauelement beliebig große Flächenabmessungen aufweisen. Die Lichtablenkelemente können je nach benötigter Lichtmenge unterschiedlich groß sein. Die Lichtleitereigenschaft eines derart ausgestatteten Glasbauelements kann das Licht über beträchtliche Strecken führen, z. B. aus einem Fenster eines oberirdischen Stockwerks hinab in einen Souterrain- oder Kellerraum, wenn das Glasbauelement entsprechend bemessen ist.

In einer ersten bevorzugten Ausführungsform ist die transparente Platte eine monolithische Glasscheibe, deren Hauptflächen an die Umgebungsluft grenzen.

In einer zweiten bevorzugten Ausführungsform ist die transparente Platte als zwischen zwei transparenten Glas- oder Kunststoffscheiben angeordnete Polymerschicht ausgebildet. Durch Auswahl eines geeigneten Werkstoffs für die Polymerschicht kann dieses Verbund-Glasbauelement Eigenschaften eines Sicherheitsglases erhalten.

In weiterer Ausbildung des Verbund-Glasbauelements sind die beiden Glas- oder Kunststoffscheiben zumindest auf ihren der Polymerschicht zugewandten Oberflächen mit einem Material beschichtet, das einen niedrigeren Brechungsindex aufweist als die Glas- oder Kunststoffscheiben und als die Polymerschicht selbst. Damit wird ein unerwünschtes Auskoppeln von Licht über die Grenzflächen sicher vermieden.

Besonders bevorzugt wird zum Herstellen der Polymerschicht ein Werkstoff mit einem Brechungsindex von wenigstens 1,4, vorzugsweise von wenigstens 1,6 verwendet, damit eine hinreichende Brechzahldifferenz zu den angrenzenden Medien sichergestellt ist.

Eine besonders einfache und flache Bauweise ergibt sich, wenn wenigstens ein Lichtablenkelement aus einem in eine transparente Polymerfolie eingearbeiteten Volumenhologramm besteht.

Für das Durchleiten von von außen auf ein als Raumfenster eingesetztes Glasbauelement treffenden Lichtstrahlen zum Beleuchten eines Innenraums werden besonders vorteilhaft die zweiten Lichtablenkelemente auf der den ersten Lichtablenkelementen abgewandten Hauptfläche der transparenten Platte angeordnet. Damit erzielt man einen definierten Lichtein- und -austritt mit exakt vorgebbaren Lichtlenkwinkeln.

Von einer Lichtquelle ausgehende Lichtstrahlen werden im Bereich des ersten Lichtablenkelements derart abgelenkt, daß sie unter einem Winkel δ in die Platte eindringen, der größer ist als der Grenzwinkel der Totalreflexion an der Grenzfläche zwischen der transparenten Platte und dem angrenzenden Medium. An deren Oberflächen werden die Lichtstrahlen mehrfach total reflektiert und wie in einem Lichtleiter innerhalb der Platte weitergeleitet.

Man erreicht eine weitere Verbesserung der Ausnutzung des einfallenden Lichts und vermeidet das Entstehen störender Lichteffekte, wenn eine lichtundurchlässige Beschichtung in den Flächenbereichen aufgetragen wird, die nicht von den Lichtablenkelementen abgedeckt sind. Besonders bevorzugt besteht die lichtundurchlässige Beschichtung aus einer Einbrennfarbe.

Schließlich werden auch am Rand des Glasbauelements Lichtverluste und unerwünschte Lichteffekte vermieden, wenn auf seine Umfangsfläche eine den Lichtaustritt auf dieser Fläche verhindernde Reflexionsschicht aufgetragen ist.

Weitere Vorteile und Weiterbildungen der Erfindung ergeben sich aus den Unteransprüchen und der nachfolgenden Beschreibung bevorzugter Ausführungsbeispiele anhand der Zeichnungen.

Von den Zeichnungen zeigt
- Fig. 1: einen Querschnitt durch eine erste Ausführungsform eines erfindungsgemäßen Glasbauelementes, und
- Fig. 2: einen Querschnitt durch eine zweite Ausführungsform.

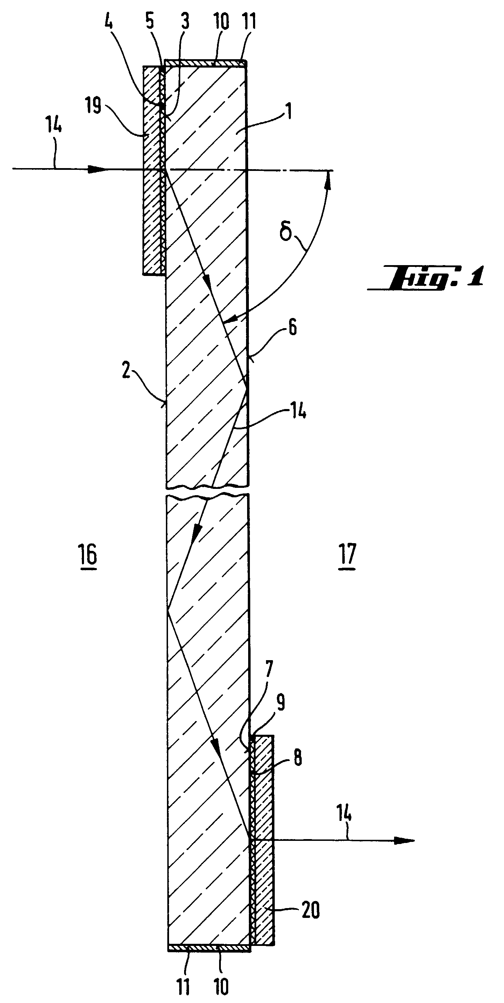

Bei dem in **Fig. 1** dargestellten Glasbauelement handelt es sich um eine monolithische Glasscheibe 1. Im eingebauten Zustand des Glasbauelementes ist die Oberfläche 2 der Glasscheibe 1 nach außen gewandt. Im oberen Bereich der Oberfläche 2 ist mittels einer Kleberschicht 3 eine ein Volumenhologramm 4 enthaltende Polymerfolie 5 befestigt. Eine entsprechende, gleichfalls ein Volumenhologramm 8 enthaltende Polymerfolie 9 ist gleichfalls mittels einer Kleberschicht 7 im unteren Bereich auf der zum Gebäudeinneren zugewandten Oberfläche 6 der Glasscheibe 1 befestigt. Die Polymerfolien 5, 9 sind jeweils mit einer schützenden Glasabdeckung 19, 20 versehen.

Durch die dünnen Kleberschichten 3 und 7 werden die in den Polymerfolien 5 und 9 enthaltenen Volumenhologramme 4 und 7 optisch an die Glasscheibe 1 angekoppelt.

Die Darstellung läßt erkennen, wie die von einer nicht dargestellten Lichtquelle ausgehenden Lichtstrahlen 14 im Bereich des Volumenhologramms 4 derart abgelenkt werden, daß sie unter einem Winkel δ in die Glasscheibe 1 eindringen, der größer ist als der Grenzwinkel der Totalreflexion an der Grenzfläche zwischen dem Glas 1 und der Luft 16, 17. An den Oberflächen 2 und 6 der Glasscheibe 1 werden die Lichtstrahlen wie ersichtlich mehrfach total reflektiert. Die Glasscheibe 1 wirkt wie ein Lichtleiter und kann die Lichtstrahlen bedarfsweise über eine große Strecke weiterleiten. Ein Lichtaustritt durch die Umfangsfläche 10 der Glasscheibe wird durch eine darauf aufgetragene reflektierende Schicht 11 verhindert.

Um Lichtverluste durch Absorption der Lichtstrahlen 14 innerhalb der Glasscheibe 1 zu verringern, wird für das erfindungsgemäße Glasbauelement vorteilhafterweise besonders eisenarmes Glas verwendet, beispielsweise ein hochtransparentes Silikatglas mit geringem Gehalt von färbenden Ionen.

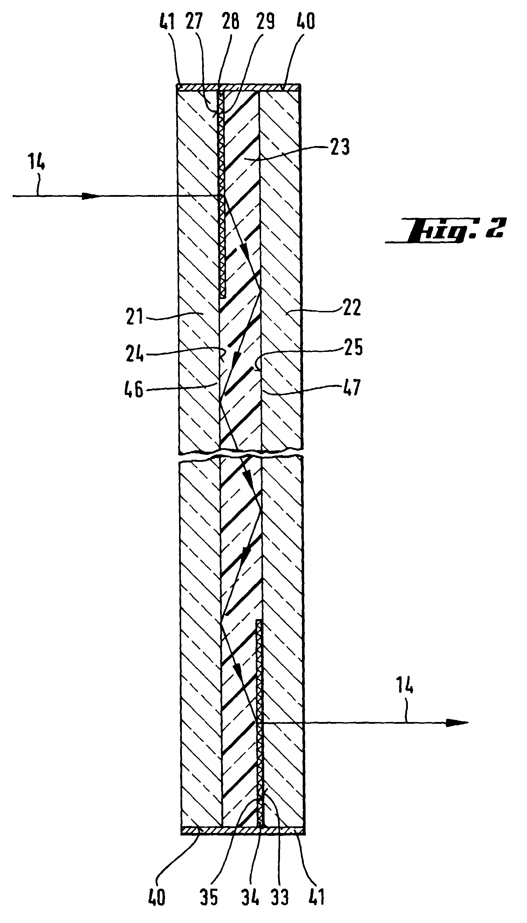

Bei der in **Fig. 2** dargestellten Ausführungsform des Glasbauelementes sind zwei Glasscheiben 21 und 22 mit einer transparenten Polymerschicht 23 verbunden, bei der es sich um eine Gießharzmasse handeln kann. Auch bei dieser Ausführungsform kommen über Kleberschichten 27, 33 mit den Glasscheiben 21 und 22 verbundene, jeweils ein Volumenhologramm 28, 34 enthaltende Polymerfolien 29, 35 zum Einsatz.

Die Polymerfolien 29 und 35 sind an die Oberflächen 24 und 25 der Glasscheiben 21, 22, optisch angekoppelt. Die Polymerschicht 23 weist einen höheren Brechungsindex auf als die angrenzenden Glasscheiben 21, 22. Die an die Polymerschicht angrenzenden Oberflächen der Glasscheiben 21, 22 können zusätzlich mit Oberflächenschichten 46, 47 aus einem Material beschichtet sein, das einen niedrigeren Brechungsindex hat als die Glasscheiben 21 und 22, beispielsweise aus SiO₂.

Durch die Wahl eines geeigneten Polymers für die Polymerschicht 23 kann man dem Glasbauelement auch die Eigenschaften eines Sicherheitsglases verleihen. Diese Polymerschicht 23 muß selbstverständlich eine hohe Transparenz für Lichtstrahlen, insbesondere für sichtbares Licht, aufweisen und gegen UV-Strahlen unempfindlich sein.

Auf der Umfangsfläche 40 des Verbund-Glasbauelementes ist wiederum eine Reflexionsschicht 41 angeordnet, um den Lichtaustritt auf dieser Fläche zu verhindern.

Die Ablenkung und Weiterleitung der Lichtstrahlen 14 innerhalb des Glasbauelements erfolgt in analoger Weise wie anhand der Fig. 1 beschrieben.

## Patentansprüche

1. Glasbauelement für die Beleuchtung von Innenräumen durch Lichtlenkung, mit wenigstens einer transparenten Platte (1; 23), deren Hauptflächen an Medien (16, 17; 46, 47) mit niedrigerem Brechungsindex als dem der Platte selbst grenzen, mit wenigstens einem flächig ausgebildeten ersten Lichtablenkelement (4; 28), das einfallende Lichtstrahlen (14) in die Platte (1; 23) unter einem Winkel einkoppelt, bei dem an der Grenzfläche zwischen der Platte (1; 23) und dem Medium (46, 47) Totalreflexion eintritt, und mit wenigstens einem im Abstand von dem ersten Lichtablenkelement (4; 28) auf einer der beiden Hauptflächen der Platte (1; 23) angeordneten zweiten Lichtablenkelement (8; 34) zum Auskoppeln von Lichtstrahlen (14) aus der Platte (1; 23).

2. Glasbauelement nach Anspruch 1, **dadurch gekennzeichnet**, daß die transparente Platte eine monolithische Glasscheibe (1) ist, deren Hauptflächen an die Umgebungsluft (16, 17) grenzen.

3. Glasbauelement nach Anspruch 1, **dadurch gekennzeichnet**, daß die transparente Platte eine zwischen zwei transparenten Glas- oder Kunststoffscheiben (21, 22) angeordnete Polymerschicht (23) ist.

4. Glasbauelement nach Anspruch 3, **dadurch gekennzeichnet**, daß die beiden Glas- oder Kunststoffscheiben (21, 22) auf ihren der Polymerschicht (23) zugewandten Oberflächen (24, 25) mit Oberflächenschichten (46, 47) versehen sind, deren Material einen niedrigeren Brechungsindex hat als die Glas- oder Kunststoffscheiben (21, 22).

5. Glasbauelement nach Anspruch 3 oder 4, **dadurch gekennzeichnet**, daß die Polymerschicht (23) aus einem Polymer mit einem Brechungsindex von wenigstens 1,4, vorzugsweise von wenigstens 1,6 besteht.

6. Glasbauelement nach einem der Ansprüche 1 bis 5, **dadurch gekennzeichnet**, daß wenigstens ein Lichtablenkelement (4, 8; 28, 34) aus einem in eine transparente Polymerfolie (5, 9; 29, 35) eingearbeiteten Volumenhologramm (4, 8; 28, 34) besteht.

7. Glasbauelement nach einem der Ansprüche 1 bis 6, **dadurch gekennzeichnet**, daß die zweiten Lichtablenkelemente (8; 34) auf der den ersten Lichtablenkelementen (4; 28) abgewandten Hauptfläche der transparenten Platte (1; 23) angeordnet sind.

8. Glasbauelement nach einem der Ansprüche 1 bis 7, **gekennzeichnet** durch eine lichtundurchlässige Beschichtung in den nicht von den Lichtablenkelementen (4, 8; 28, 34) abgedeckten Flächenbereichen.

9. Glasbauelement nach Anspruch 8, **dadurch gekennzeichnet**, daß die lichtundurchlässige Beschichtung aus einer Einbrennfarbe besteht.

10. Glasbauelement nach einem der vorstehenden Ansprüche, **dadurch gekennzeichnet,** daß auf die Umfangsfläche (10; 40) des Glasbauelementes eine den Lichtaustritt auf dieser Fläche verhindernde Reflexionsschicht (11; 41) aufgetragen ist.
